# EUROPÄISCHE PATENTANMELDUNG

(11) **EP 4 699 856 A1**
(43) Veröffentlichungstag der Anmeldung: **25.02.2026**
(21) Anmeldenummer: 25192891.7
(22) Anmeldetag: 30.07.2025
(51) Int. Cl.: B60N 2/015

(54) **SITZHALTERUNG FÜR EINEN FAHRGASTSITZ UND SITZBEFESTIGUNG MIT EINER DERARTIGEN SITZHALTERUNG**

(30) Priorität: 23.08.2024 DE 102024124176
(71) Anmelder: Hermann Schnierle GmbH, 86368 Gersthofen (DE)
(72) Erfinder: Schnierle, Martin, 86153 Augsburg (DE)
(74) Vertreter: Charrier Rapp & Liebau

(57) **Zusammenfassung**

Sitzhalterung (2) für einen Fahrgastsitz, mit einem Fußteil (8, 9, 10), an dem nach unten ragende Spannelemente (5) zum Eingriff in Führungsnuten (4) einer Bodenschiene (1), axial verstellbare Arretierelemente (7) zum formschlüssigen Eingriff in Öffnungen (6) der Bodenschiene (1) und ein Verstellmechanismus zur Verschiebung der Spannelemente (5) und der Arretierelemente (7) in entgegengesetzten Richtungen angeordnet sind. Der Verstellmechanismus enthält mindestens ein translatorisch verschiebbares laschen- oder stangenförmiges Schubelement (17) und miteinander korrespondierende Steuerelemente (12, 14, 20, 21) zur Umwandlung der translatorischen Verschiebung des mindestens einen Schubelements (17) in eine gegensinnige Auf- und Abwärtsbewegung der Spannelemente (5) und der Arretierelemente (7).

## Beschreibung

Die Erfindung betrifft eine Sitzhalterung für einen Fahrgastsitz nach dem Oberbegriff des Anspruchs 1. Die Erfindung betrifft außerdem eine Sitzbefestigung mit einer derartigen Sitzhalterung.

Aus der DE 10 2009 020 874 A1 ist eine gattungsgemäße Sitzhalterung bekannt. Diese enthält ein aus horizontalen Trägern und schrägen Stützen gebildetes Stuhlfußteil, an dem mehrere nach unten ragende Führungsbolzen und axial verschiebbare Spannbolzen zum Eingriff in eine Halteschiene angeordnet sind. Um das Stuhlfußteil gegenüber der Halteschiene zu verriegeln zur Verschiebung freizugeben, müssen die Führungsbolzen und die Arretierbolzen axial in entgegengesetzte Richtung verschoben werden. Dies erfolgt hier durch eine Hebeleinrichtung mit einem um einen festen Drehpunkt verschwenkbaren Hebelarm, der über Anlenkachsen den in axialer Richtung verschiebbaren Arretierbolzen und den Spannbolzen anlenkt. Um die gegensinnige Bewegung der Arretierbolzen und Spannbolzen zu erreichen, sind die Anlenkachse für den Arretierbolzen vor dem Drehpunkt und die Anlenkachse für den Spannbolzen hinter dem Drehpunkt des Hebelarms angeordnet.

Aufgabe der Erfindung ist es, eine verstellbare Sitzhalterung der eingangs genannten Art und eine Sitzbefestigung mit einer derartigen Sitzhalterung zu schaffen, die eine alternative Verstellung ermöglichen und dennoch eine genaue und sichere Halterung gewährleisten.

Diese Aufgabe wird durch eine verstellbare Sitzhalterung mit den Merkmalen des Anspruchs 1 und durch eine Sitzbefestigung mit den Merkmalen des Anspruchs 11 gelöst. Zweckmäßige Weiterbildungen und vorteilhafte Ausführungsformen der Erfindung sind Gegenstand der Unteransprüche.

Bei der erfindungsgemäßen Sitzhalterung sind an einem Fußteil nach unten ragende Spannelemente zum Eingriff in Führungsnuten einer Bodenschiene, axial verstellbare Arretierelemente zum formschlüssigen Eingriff in Öffnungen der Bodenschiene und ein Verstellmechanismus zur Verschiebung der Spannelemente und der Arretierelemente in entgegengesetzte Richtungen angeordnet. Der Verstellmechanismus zur Verschiebung der Spannelemente und der Arretierelemente in entgegengesetzte Richtungen weist mindestens ein translatorisch verschiebbares laschen- oder stangenförmiges Schubelement und miteinander korrespondierende Steuerelemente zur Umwandlung der translatorischen Bewegung des mindestens einen Schubelements in eine gegensinnige Auf- und Abwärtsbewegung der Spannelemente und der Arretierelemente auf. Auf diese Weise ist eine besonders stabile und zuverlässige Verstellung erreichbar.

In einer besonders genauen und soliden Ausführung kann der Verstellmechanismus zwei an den Innenseiten oder Außenseiten zweier paralleler Tragprofile des Fußteils in deren Längsrichtung verschiebbar geführte laschen- oder stangenförmige Schubelemente enthalten.

Die laschen- oder stangenförmigen Schubelemente können in einer weiteren zweckmäßigen Ausführung an den Innenseiten oder Außenseiten der beiden Tragprofile über horizontale Langlöcher in den Schubelementen und in die Langlöcher eingreifende Führungszapfen an den Tragprofilen in deren Längsrichtung translatorisch verschiebbar geführt sein.

Die miteinander korrespondierenden Steuerelemente können vorzugsweise als entgegengesetzt geneigte Langlöcher an dem Schubelement bzw. den Schubelementen und innerhalb der Langlöcher geführte, mit den Spannelementen und den Arretierelementen verbundene Führungsstangen oder Führungsstifte ausgebildet sein. Dadurch ist eine genaue und sichere Umwandlung der Verschiebebewegung des Schubelements in die gegensinnige Auf- und Abwärtsbewegung der Spannelemente und der Arretierelemente erreichbar.

Die laschen- oder stangenförmigen Schubelemente sind vorzugsweise über einen Hebelmechanismus verschiebbar. In einer bevorzugten Ausführung kann der Hebelmechanismus zwei mit den Schubelementen gelenkig verbundene, zwischen einer heruntergeklappten Entriegelungsstellung und einer hochgeklappten Verriegelungsstellung verschwenkbare Seitenteile enthalten. Die beiden Seitenteile können durch einen Betätigungsgriff miteinander verbunden sein. Im Falle eines einzelnen Schubelements kann der Hebelmechanismus auch anders ausgestaltet sein.

Die beiden Seitenteile des Hebelmechanismus können an ihren unteren Enden über jeweils einen unteren Gelenkbolzen mit den Schubelementen gelenkig verbunden sein. Über jeweils einen in den Seitenteilen oberhalb der unteren Gelenkbolzen angeordneten oberen Gelenkbolzen können die Seitenteile außerdem gelenkig mit jeweils einer um eine stationäre Drehachse schwenkbaren Verbindungslasche verbunden sein. Durch Verschwenken der beiden Seitenteile können so die beiden Schubelemente zwischen einer Entriegelungsposition und einer Verriegelungsposition verschoben werden.

Die Erfindung betrifft außerdem eine Sitzbefestigung mit einer Bodenschiene und einer in der Bodenschiene verstellbar geführten Sitzhalterung, welche die vorgenannten Merkmale enthält.

Die Bodenschiene weist zweckmäßigerweise zwei zueinander parallele Führungsstege mit jeweils einer T-förmigen Führungsnut zum Eingriff der Spannelemente und Öffnungen zum Eingriff der Arretierelemente der Sitzhalterung auf.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Sitzbefestigung mit einer Bodenschiene und einer verstellbaren und entriegelten Sitzhalterung in einer Perspektive;
- **Figur 2**: einen Querschnitt der in Figur 1 gezeigten Sitzbefestigung im Bereich der Spannelemente der Sitzhalterung in einem verriegelten Zustand;
- **Figur 3**: die verstellbare Sitzhalterung von Figur 1 in einer Entriegelungsstellung;
- **Figur 4**: den unteren Teil der Sitzhalterung von Figur 3 in einem Längsschnitt;
- **Figur 5**: den unteren Teil der Sitzhalterung von Figur 3 in einer Seitenansicht;
- **Figur 6**: die verstellbare Sitzhalterung von Figur 1 in einer Verriegelungsstellung;
- **Figur 7**: den unteren Teil der Sitzhalterung von Figur 6 in einem Längsschnitt und
- **Figur 8**: den unteren Teil der Sitzhalterung von Figur 6 in einer Seitenansicht.

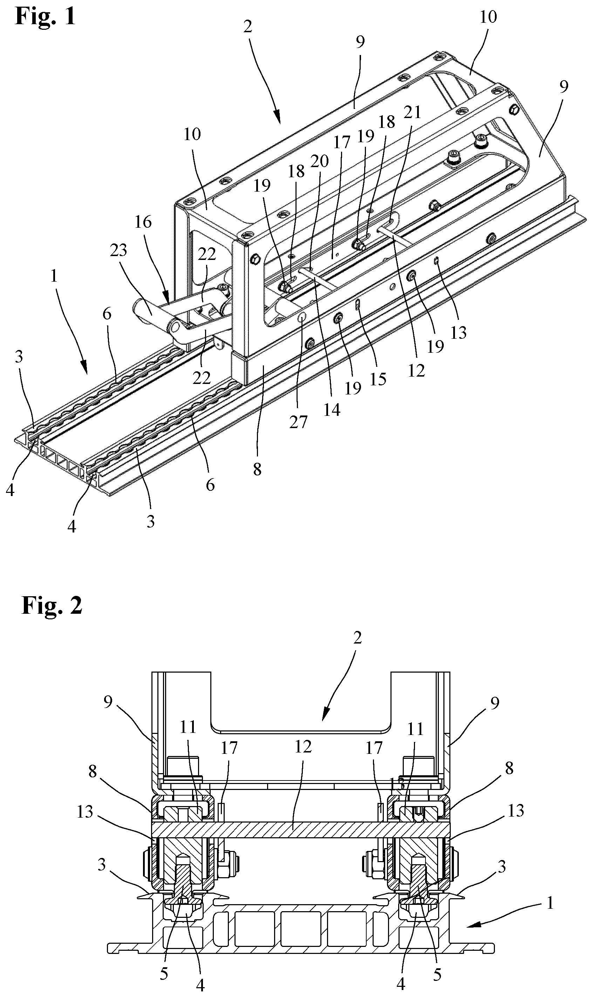

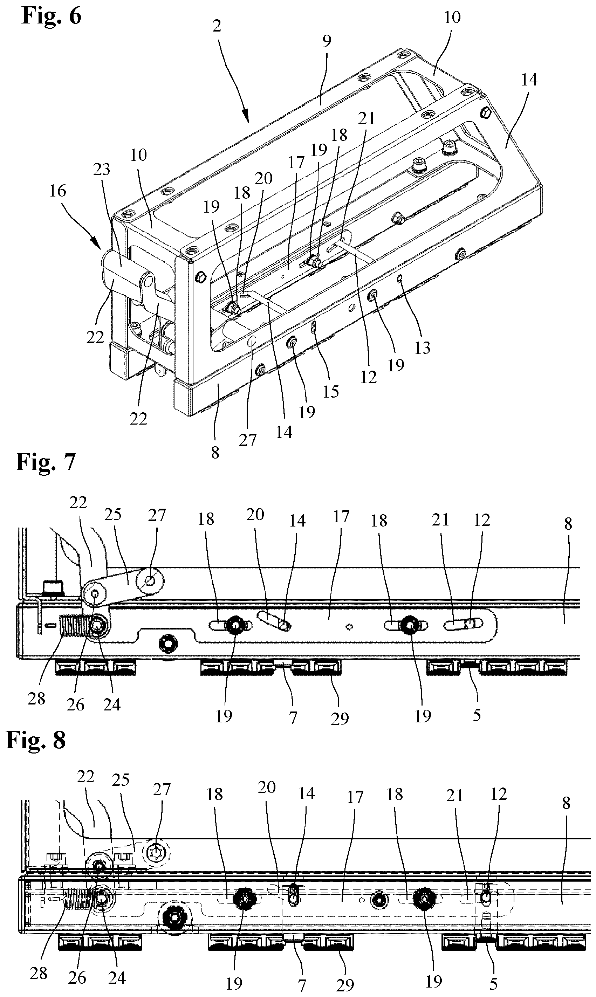

In den Figuren 1 und 2 ist eine für die verstellbare Halterung von Fahrgastsitzen in Fahrzeugen konzipierte Sitzbefestigung mit einer Bodenschiene 1 und einer in der Bodenschiene 1 verstellbar geführten Sitzhalterung 2 in einer Perspektivansicht und einem Querschnitt gezeigt. Die in einen Fahrzeugboden eines Fahrzeugs eingelassene oder auf diesem befestigte Bodenschiene 1 weist zwei zueinander parallele Führungsstege 3 mit jeweils einer T-förmigen Führungsnut 4 zum Eingriff in Figur 2 gezeigter Spannelemente 5 der Sitzhalterung 2 auf. In den beiden Führungsstegen 3 der hier als Aluminiumprofilschiene ausgebildeten Bodenschiene 1 sind voneinander beabstandete Öffnungen 6 zum Einsetzen der Spannelemente 5 und zum Eingriff zweier in den Figuren 6 und 7 erkennbarer und im Folgenden noch näher erläuterte bolzenförmiger Arretierelemente 7 der Sitzhalterung 2 vorgesehen. Über die Öffnungen 6 können die von der Unterseite der Sitzhalterung 2 nach unten vorstehenden Spannelemente 5 in die Führungsnut 4 der beiden Führungsstege 3 eingeführt werden. Die Öffnungen 6 dienen auch als Arretieröffnungen zum formschlüssigen Eingriff der bolzenförmigen Arretierelemente 7.

Wie besonders aus den Figuren 1 und 2 hervorgeht, weist die Sitzhalterung 2 zwei zueinander parallele und zur Auflage auf den beiden Führungsstegen 3 der Bodenschiene 1 dienende untere horizontale Tragprofile 8 auf. Auf den beiden Tragprofilen 8 ist eine hier als Blechkonstruktion aus vertikalen Seitenteilen 9 und horizontalen Verbindungsteilen 10 zusammengesetzte Tragkonstruktion zur Befestigung eines Fahrgastsitzes angeschraubt. Durch die beiden Tragprofile 8 und die aus den vertikalen Seitenteilen 9 und den horizontalen Verbindungsteilen 10 zusammengesetzte Tragkonstruktion wird ein Fußteil gebildet, auf dem ein Fahrgastsitz befestigt werden. Je nach Bedarf und Ausführung kann das Fußteil oder die Tragkonstruktion aber auch anders ausgestaltet sein.

In Figur 2 ist erkennbar, dass in den beiden als Hohlprofilrohr ausgebildeten Tragprofilen 8 des Fußteils jeweils ein Spannbolzen 11 quer zur Längsrichtung des Tragprofils 8 nach unten und oben verschiebbar angeordnet ist. An der Unterseite der beiden innerhalb der Tragprofile 8 verschiebbar geführten Spannbolzen 11 ist das hier als Pilzkopf ausgebildete Spannelement 5 über eine Schraubverbindung befestigt. Werden die Spannbolzen 11 nach oben gezogen, gelangen die hier als Pilzkopf ausgebildeten Spannelement 5 mit ihrem vergrößerten Kopf zur Anlage an der Unterseite nach innen ragender Stege an den Führungsnuten 4 der Bodenschiene 1 und ziehen die Tragprofile 8 des Fußteils gegen die Bodenschiene 1. Dadurch wird eine spielfreie Halterung der Sitzhalterung 2 innerhalb der Bodenschiene 1 erreicht. Die beiden gegenüberliegenden Spannbolzen 11 sind durch eine quer zur Längsrichtung des Tragprofils 8 verlaufende erste Führungsstange 12 miteinander verbunden. Die erste Führungsstange 12 ist über gegenüberliegende erste vertikale Langlöcher 13 in den beiden Tragprofilen 8 verschiebbar geführt. Über die in den ersten vertikalen Langlöchern 13 in den beiden Tragprofilen 8 verschiebbar geführte erste Führungsstange 12 sind die beiden Spannbolzen 11 mit den daran befestigten Spannelementen 5 zwischen einer nach unten gedrückten Lösestellung und einer hochgezogenen Spannstellung bewegbar. Die als Pilzkopf ausgebildeten Spannelemente 5 sind derart ausgeführt, dass sie in der hochgezogenen Spannstellung zur Anlage an der Oberseite der T-förmigen Führungsnut 4 gelangen und dadurch die Tragprofile 8 gegen die Bodenplatte 1 ziehen. In der nach unten gedrückten Stellung sind die Spannelemente 5 dagegen innerhalb der Führungsnut 4 frei beweglich, so dass die Sitzhalterung 2 gegenüber der Bodenschiene 1 verschoben werden kann.

In den beiden horizontalen Tragprofilen 8 sind auch zwei gegenüberliegende bolzenförmige Arretierelemente 7 zum Eingriff in die Öffnungen 6 der Bodenschiene 1 angeordnet. Die beiden Arretierelemente 7 sind durch eine in Figur 1 gezeigte, quer zur Längsrichtung des Tragprofils 8 verlaufende zweite Führungsstange 14 miteinander verbunden. Die zweite Führungsstange 14 ist über gegenüberliegende zweite vertikale Langlöcher 15 in den beiden Tragprofilen 8 verschiebbar geführt. Über die in den zweiten vertikalen Langlöchern 15 in den beiden Tragprofilen 8 verschiebbar geführte zweite Führungsstange 14 sind die beiden bolzenförmigen Arretierelemente 7 zwischen einer in die Öffnungen 6 eingreifenden unteren Arretierstellung und einer angehobenen Freigabestellung bewegbar.

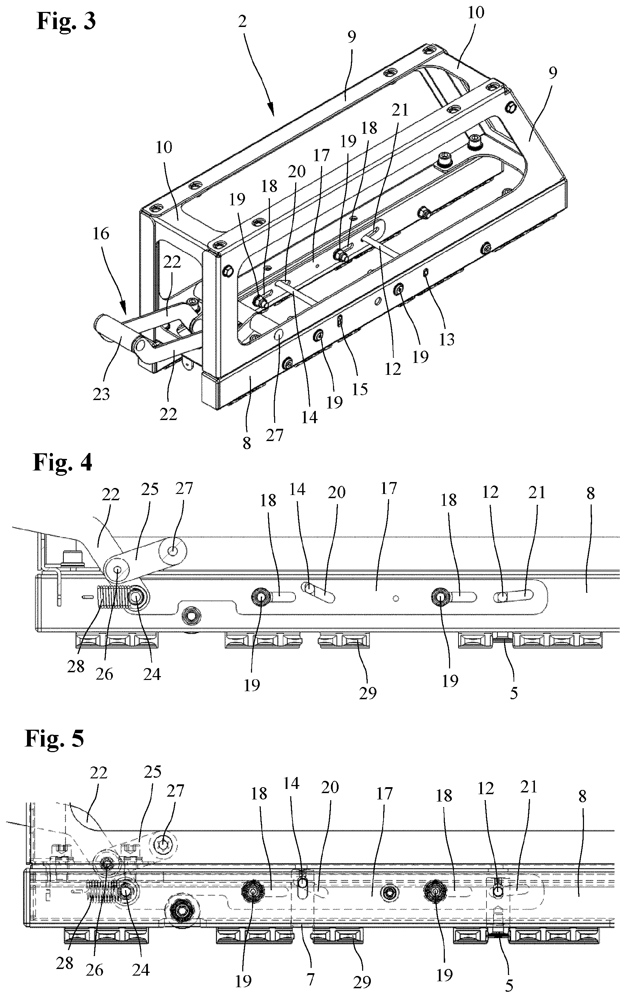

Um die Sitzhalterung 2 gegenüber der Bodenplatte 1 zu verriegeln oder zur Verschiebung freizugeben, müssen die Spannelemente 5 und die Arretierelemente 7 durch entgegengesetzte Bewegung der beiden Führungsstangen 12 und 14 in entgegengesetzte Richtung verschoben werden. Dies erfolgt über einen Verstellmechanismus, der zwei über einen Hebelmechanismus 16 translatorisch verschiebbare laschen- oder stangenförmige Schubelemente 17 und miteinander korrespondierende Steuerelemente zur Umwandlung der translatorischen Bewegung der Schubelemente 17 in eine gegensinnige Auf- und Abwärtsbewegung der Spannelemente und der Arretierelemente enthält. Um die Sitzhalterung 2 gegenüber der Bodenplatte 1 für eine Verschiebung freizugeben, werden die beiden Spannelemente 5 nach unten gedrückt und die beiden bolzenförmigen Arretierelemente 7 nach oben gezogen, wie dies in den Figuren 3 bis 5 gezeigt ist. Für eine Verriegelung der Sitzhalterung 2 an der Bodenplatte 1 werden dagegen die beiden Spannelemente 5 nach oben gezogen und die beiden bolzenförmigen Arretierelemente 7 nach unten zum Eingriff in die Öffnungen 6 gedrückt, wie dies in den Figuren 6 bis 8 gezeigt ist.

Die beiden laschen- oder stangenförmigen Schubelemente 17 sind an den Innenseiten der beiden Tragprofile 8 über horizontale Langlöcher 18 in den Schubelementen 17 und in die Langlöcher 18 eingreifende Führungszapfen 19 an den Tragprofilen 8 in deren Längsrichtung translatorisch verschiebbar geführt und sind zwischen einer in den Figuren 3 bis 5 gezeigten Entriegelungsposition und einer in den Figuren 6 bis 8 gezeigten Verriegelungsposition verschiebbar. Die miteinander korrespondierenden Steuerelemente zur Umwandlung der translatorischen Bewegung der Schubelemente 17 in eine gegensinnige Auf- und Abwärtsbewegung der Spannelemente 5 und der Arretierelemente 7 sind in dem gezeigten Ausführungsbeispiel als Langloch-Stift-Führung mit entgegengesetzt geneigten ersten und zweiten schrägen Langlöchern 20 und 21 an den Schubelementen 17 und den innerhalb der Langlöcher 20 und 21 geführten, mit den Spannelementen 5 und den Arretierelementen 7 verbundenen Führungsstangen 12 und 14 ausgeführt. Durch die entgegengesetze Neigung der beiden schrägen Langlöcher 20 und 21, werden die darin geführten Führungsstangen 12 und 14 und die damit verbundenen Spannelemente 5 und Arretierelemente 7 durch eine Verschiebung der Schubelemente 17 in entgegengesetzten Richtungen bewegt.

Wie aus Figur 1 und den Figuren 3 und 5 ersichtlich ist, umfasst der Hebelmechanismus 16 zur translatorischen Verschiebung der beiden Schubelemente 17 zwei zueinander parallele Seitenteile 22, die über einen zwischen den Seitenteilen 22 angeordneten Betätigungsgriff 23 zwischen einer in den Figuren 3 bis 5 gezeigten heruntergeklappten Entriegelungsstellung und einer in den Figuren 6 bis 8 gezeigten hochgeklappten Verriegelungsstellung verschwenkbar sind. In den Figuren 4 und 5 bzw. 7 und 8 ist erkennbar, dass die beiden unteren Enden der Seitenteile 22 des Hebelmechanismus über jeweils einen unteren Gelenkbolzen 24 mit den Schubelementen 17 an deren in Figur 3 linken Enden gelenkig verbunden sind.

Über Verbindungslaschen 25, die mit ihren einen Enden über jeweils einen oberhalb der unteren Gelenkbolzen 24 in den Seitenteilen 22 angeordneten oberen Gelenkbolzen 26 mit dem jeweiligen Seitenteil 22 gelenkig verbunden und mit ihren anderen Enden um eine in den beiden Seitenteilen 9 fest angeordnete stationäre Drehachse 27 schwenkbar gelagert sind, sind die beiden Seitenteile 22 des Hebelmechanismus schwenkbar an der Sitzhalterung 2 angelenkt.

Durch Verschwenken des durch die beiden Seitenteile 22 und den dazwischen angeordneten Betätigungsgriff 23 gebildeten Schwenkhebels können so die beiden Schubelemente 17 zwischen der in den Figuren 3 bis 5 gezeigten Entriegelungsposition und der in den Figuren 6 bis 8 gezeigten Verriegelungsposition verschoben werden. An den unteren Gelenkbolzen 24 greift eine Zugfeder 28 an, durch welche die Verschiebung der Schubelemente 17 in die Entriegelungsstellung unterstützt wird. An der Unterseite der horizontalen Tragprofile 8 sind Gleitführungen 29 zur Führung der Sitzhalterung 2 innerhalb der Führungsnuten 4 der Bodenschiene 1 angeordnet.

Werden die beiden Seitenteile 22 über den dazwischen angeordneten Betätigungsgriff 23 in eine in den Figuren 3 bis 5 gezeigte heruntergeklappte Entriegelungsstellung bewegt, werden die Schubelemente 17 von dem Betätigungsgriff 23 weg nach rechts in die Entriegelungsposition verschoben, wodurch die Spannelemente 5 über die Führungsstange 12 und die zweiten Langlöcher 21 nach unten gedrückt und die Arretierelemente 7 über die Führungsstange 14 und die ersten Langlöcher 20 nach oben gezogen werden. Dann kann die Sitzhalterung 2 gegenüber der Bodenschiene 1 verschoben werden.

Wenn dagegen die beiden Seitenteile 22 über den dazwischen angeordneten Betätigungsgriff 23 in eine in den Figuren 6 bis 8 gezeigte hochgeklappte Verriegelungsstellung bewegt werden, werden die Schubelemente 17 nach links in die Verrieglungsposition verschoben, wodurch die Spannelemente 5 über die Führungsstange 12 und die zweiten Langlöcher 21 nach oben gezogen und die Arretierelemente 7 über die Führungsstange 14 und die ersten Langlöcher 20 nach oben geschoben werden. Dadurch kann die Sitzhalterung 2 gegenüber der Bodenschiene 1 verriegelt werden.

### Bezugszeichenliste

- 1: Bodenschiene
- 2: Sitzhalterung
- 3: Führungssteg
- 4: Führungsnut
- 5: Spannelement
- 6: Öffnung
- 7: Arretierelement
- 8: Tragprofil
- 9: Seitenteil
- 10: Verbindungsteil
- 11: Spannbolzen
- 12: Erste Führungsstange
- 13: Erstes vertikales Langloch
- 14: Zweite Führungsstange
- 15: Zweites vertikales Langloch
- 16: Hebelmechanismus
- 17: Schubelement
- 18: Horizontales Langloch
- 19: Führungszapfen
- 20: Erstes schräges Langloch
- 21: Zweites schräges Langloch
- 22: Seitenteil
- 23: Betätigungsgriff
- 24: Unterer Gelenkbolzen
- 25: Verbindungslasche
- 26: Oberer Gelenkbolzen
- 27: Drehachse
- 28: Zugfeder
- 29: Gleitführung

## Patentansprüche

1. Sitzhalterung (2) für einen Fahrgastsitz, mit einem Fußteil (8, 9, 10), an dem nach unten ragende Spannelemente (5) zum Eingriff in Führungsnuten (4) einer Bodenschiene (1), axial verstellbare Arretierelemente (7) zum formschlüssigen Eingriff in Öffnungen (6) der Bodenschiene (1) und ein Verstellmechanismus zur Verschiebung der Spannelemente (5) und der Arretierelemente (7) in entgegengesetzten Richtungen angeordnet sind, **dadurch gekennzeichnet, dass** der Verstellmechanismus mindestens ein translatorisch verschiebbares laschen- oder stangenförmiges Schubelement (17) und miteinander korrespondierende Steuerelemente (12, 14, 20, 21) zur Umwandlung der translatorischen Verschiebung des mindestens einen Schubelements (17) in eine gegensinnige Auf- und Abwärtsbewegung der Spannelemente (5) und der Arretierelemente (7) enthält.

2. Sitzhalterung (2) nach Anspruch 1, **dadurch gekennzeichnet, dass** der Verstellmechanismus zwei an den Innenseiten oder Außenseiten zweier paralleler Tragprofile (8) des Fußteils (8, 9, 10) in deren Längsrichtung verschiebbar geführte laschen- oder stangenförmige Schubelemente (17) enthält.

3. Sitzhalterung (2) nach Anspruch 2, **dadurch gekennzeichnet, dass** die laschen- oder stangenförmigen Schubelemente (17) an den Innenseiten oder Außenseiten der beiden Tragprofile (8) über horizontale Langlöcher (18) in den Schubelementen (17) und in die Langlöcher (18) eingreifende Führungszapfen (19) an den Tragprofilen (8) in deren Längsrichtung translatorisch verschiebbar geführt sind.

4. Sitzhalterung (2) nach einem der Ansprüche 1 bis 3, **dadurch gekennzeichnet, dass** die miteinander korrespondierenden Steuerelemente (12, 14, 20, 21) als entgegengesetzt geneigte Langlöcher (20, 21) am Schubelement (17) und innerhalb der Langlöcher (20, 21) geführte, mit den Spannelementen (5) und den Arretierelementen (7) verbundene Führungsstangen (12, 14) oder Führungsstifte ausgebildet sind.

5. Sitzhalterung (2) nach einem der Ansprüche 2 bis 4, **dadurch gekennzeichnet, dass** die laschen- oder stangenförmigen Schubelemente (17) über einen Hebelmechanismus (16) verschiebbar sind.

6. Sitzhalterung (2) nach Anspruch 5, **dadurch gekennzeichnet, dass** der Hebelmechanismus (16) zwei mit den Schubelementen (17) gelenkig verbundene, zwischen einer heruntergeklappten Entriegelungsstellung und einer hochgeklappten Verriegelungsstellung verschwenkbare Seitenteile (22) enthält.

7. Sitzhalterung (2) nach Anspruch 6, **dadurch gekennzeichnet, dass** die beiden Seitenteile (22) des Hebelmechanismus (16) an ihren unteren Enden über jeweils einen unteren Gelenkbolzen (24) mit den Schubelementen (17) gelenkig verbunden sind.

8. Sitzhalterung (2) nach Anspruch 7, **dadurch gekennzeichnet, dass** an dem unteren Gelenkbolzen (24) eine Zugfeder (28) angreift.

9. Sitzhalterung (2) nach Anspruch 7 oder 8, **dadurch gekennzeichnet, dass** die beiden Seitenteile (22) des Hebelmechanismus (16) über jeweils einen in den Seitenteilen (22) oberhalb der unteren Gelenkbolzen (24) angeordneten oberen Gelenkbolzen (26) gelenkig mit jeweils einer um eine stationäre Drehachse (27) schwenkbaren Verbindungslasche (25) verbunden sind.

10. Sitzhalterung (2) nach einem der Ansprüche 6 bis 9, **dadurch gekennzeichnet, dass** die beiden Seitenteile (22) durch einen Betätigungsgriff (23) miteinander verbunden sind.

11. Sitzbefestigung mit einer Bodenschiene (1) und einer in der Bodenschiene (1) verstellbar geführten Sitzhalterung (2), **dadurch gekennzeichnet, dass** die Sitzhalterung (2) nach einem der Ansprüche 1 bis 10 ausgebildet ist.

12. Sitzbefestigung nach Anspruch 11, **dadurch gekennzeichnet, dass** die Bodenschiene (1) zwei zueinander parallele Führungsstege (3) mit jeweils einer T-förmigen Führungsnut (4) zum Eingriff der Spannelemente (5) und Öffnungen (6) zum Eingriff der Arretierelemente (7) der Sitzhalterung (2) enthält.
